# EUROPÄISCHE PATENTSCHRIFT

(11) **EP 2 102 626 B1**
(45) Veröffentlichungstag und Bekanntmachung des Hinweises auf die Patenterteilung: **03.10.2012**
(21) Anmeldenummer: 07856322.8
(22) Anmeldetag: 30.11.2007
(51) Int. Cl.: G01N 17/02, G01N 17/00, G21C 17/06, G01N 1/28

(54) **VERFAHREN ZUR VORBEHANDLUNG EINES BRENNSTABHÜLLROHRES FÜR MATERIALUNTERSUCHUNGEN**
METHOD FOR THE PRE-TREATMENT OF A FUEL ROD CLADDING TUBE FOR MATERIAL TESTING
PROCÉDÉ DE PRÉTRAITEMENT D'UN TUBE D'ENROBAGE DE CRAYON DE COMBUSTIBLE POUR DES ANALYSES DE MATÉRIAU

(30) Priorität: 22.12.2006 DE 102006062152
(43) Veröffentlichungstag der Anmeldung: 23.09.2009
(73) Patentinhaber: Areva NP GmbH, 91052 Erlangen (DE)
(72) Erfinder: Dorsch, Thomas, 91058 Erlangen (DE)
(74) Vertreter: Tergau & Walkenhorst
(86) Internationale Anmeldenummer: PCT/EP2007/010419
(87) Internationale Veröffentlichungsnummer: WO 2008/080471

(56) Entgegenhaltungen:
- DE-B3-102006 009 502
- JP-A- 2 006 783
- US-A- 4 425 193
- US-B1- 6 369 566
- JOURDAIN P ET AL: "CORROSION PERFORMANCE OF OPTIMISED AND ADVANCED FUEL ROD CLADDING IN PWRS AT HIGH BURNUPS" TOPFUEL. INTERNATIONAL TOPICAL MEETING, 1997, Seiten 5.153-5.160, XP001095337

## Beschreibung

Die Erfindung betrifft ein Verfahren zur Vorbehandlung eines Brennstabhüllrohres für Materialuntersuchungen, insbesondere für Untersuchungen des Korrosionsverhaltens. Sie betrifft weiterhin die Verwendung einer elektrochemischen Dreielektrodenanordnung zur Durchführung des Verfahrens sowie die Verwendung eines nach einem derartigen Verfahren behandelten Brennstabhüllrohres als Prüfkörper für eine laborgestützte Untersuchung seiner Korrosionseigenschaften.

Das Dokument JOURDAIN P. et al.: "Corrosion Performance of Optimised and Advanced Fuel Rod Cladding in Pwrs at High Burnups" Topfuel International Topical Meeting, 1997, Seiten 5153 bis 5160 offenbart ein Verfahren zur Vorbehandlung eines Brennstabhüllrohres für Materialuntersuchungen, insbesondere für Untersuchungen des Korrosionsverhaltens, bei dem das Brennstabhüllrohr zumindest teilweise mit einer Eisenoxidschicht überzogen wird, indem das Brennstabhüllrohr in einem Autoklav heißem Wasser ausgesetzt wird (vgl. Seite 5158, letzter Absatz).

JP 02 006783 A offenbart ein Verfahren zur Behandlung eines Brennstabhüllrohres zum Korrosionsschutz, bei dem das Brennstabhüllrohr durch Eintauchen in ein wässriges Elektrolytmedium mit einer Zirkonium-Oxidschicht überzogen wird, wobei die Oxidpartikel durch anodische Oxidation erzeugt werden.

US 6,369,566 B1 offenbart ein Verfahren zur Messung der Dicke einer CRUD-Schicht, die Eisenoxidpartikel (Hamatit) enthält; die CRUD-Schicht entsteht aber im Reaktor, während des normalen Betriebs.

US 4,425,193 A offenbart ein Verfahren zur Prognose des Korrosionsverhaltens eines Brennstabhüllrohres, wobei ein polierter Bereich des Brennstabhüllrohres als Anode in einer elektrochemischen Zelle fungiert.

Üblicherweise bestehen die Brennelemente eines Kernreaktors aus einem Bündel von Brennstäben. Jeder der Brennstäbe weist eine die äußere Umschließung oder Ummantelung bildende Brennstabhülle auf, die auch als Brennstabhüllrohr oder kurz Hüllrohr bezeichnet wird, und die in ihrem Inneren den angereicherten Kernbrennstoff, zum Beispiel in Form von gesinterten Urandioxid-Tabletten (Pellets), enthält. Die Brennstabhülle soll den Kernbrennstoff von dem die Brennelemente oder die Brennstäbe umströmenden Fühlmittel trennen und verhindern, dass die bei der Kernspaltung entstehenden Spaltprodukte in das Kühlmittel gelangen oder mit ihm in direkten Kontakt treten.

Bei wassermoderierten Kernreaktoren sind die Brennstabhüllrohre üblicherweise aus Zirkonium oder aus einer Zirkoniumlegierung gefertigt. Insbesondere kommen dabei sogenannte Zirkalloy-Legierungen zum Einsatz, die neben Zirkonium als Hauptbestandteil auch noch geringe Mengen von Zinn, Eisen, Nickel, Chrom oder Niob enthalten können. Zirkonium ist vor allem wegen seiner vergleichsweise geringen Absorbtionsquerschnitte für Neutronen, oder anders ausgedrückt, wegen seiner hohen Neutronenpermeabilität, aber auch aufgrund seiner hohen Temperaturbeständigkeit und guten Wärmeleitfähigkeit ein bei der Fertigung der Brennstabhüllen bevorzugtes Material.

Da die Brennstäbe beim Betrieb eines Kernreaktors ständig dem umgebenden Kühlmedium ausgesetzt sind, welches je nach chemischer Konditionierung und "Reaktorfahrweise" einen nicht zu vernachlässigenden Anteil an oxidierenden Bestandteilen oder gelösten Gasen, zum Beispiel Sauerstoff, enthalten kann, ist eine zunehmende Korrosion der Zirkalloy-Oberflächen im Laufe der Zeit unvermeidlich. Dadurch ändern sich möglicherweise die strukturellen Eigenschaften des Hüllrohrmaterials in unerwünschter, für die betriebliche Sicherheit nachteiliger Weise. Die Korrosion ist damit einer der Vorgänge, welche die Einsatzzeit der Brennelemente im Reaktor auf etwa 3 bis 5 Jahre begrenzen.

Neben einer an sich erwünschten, zur Passivierung der Zirkalloy-Oberflächen der Hüllrohre beitragenden Ausbildung von Zirkoniumoxid-Schichten kann es insbesondere im Leistungsbetrieb von Siedewasserreaktoren infolge von im Reaktorkühlwasser gelösten oder enthaltenen Eisenoxidpartikeln zur Bildung sogenannter CRUD-Schichten oder Ablagerungen auf den Hüllrohren kommen. Als CRUD (ursprünglich ein Akronym für "Chalk River Unidentified Deposit") bezeichnet der Fachmann in diesem Zusammenhang üblicherweise eine Mischung oder Agglomeration von verschiedenartigen Eisenoxiden, in die Fremdionen wie etwa Zn²⁺, Mn²⁺, Zr³⁺ oder Ni²⁺ eingelagert sein können. Dabei hängt die genaue Struktur und Zusammensetzung der Oxide sehr stark von den Bedingungen während ihrer Bildung ab, zum Beispiel vom pH-Wert des Kühlwassers, von der Temperatur, vom Vorhandensein von Fremdionen etc.

Zwar besteht weitgehend Einigkeit darüber, dass sich derartige Ablagerungen im allgemeinen eher nachteilig auf die Integrität und Dauerfestigkeit des Untergrundmaterials auswirken, jedoch sind die Wirkungsmechanismen im Detail noch wenig erforscht, und quantitative Aussagen über die Auswirkungen von CRUD-Schichten auf das Korrosionsverhalten und die Lebensdauer von Brennstabhüllrohren unter den in einem Siedewasserreaktor üblichen Betriebsbedingungen sind bislang noch kaum möglich. Dies hängt insbesondere damit zusammen, dass eine Vor-Ort-Untersuchung der CRUD-Ablagerungsvorgänge während des tatsächlichen Reaktorbetriebs kaum praktikabel ist und auch eine eingehende nachträgliche Untersuchung der Brennstabhüllrohre von "verbrauchten", aus dem Reaktorbecken entfernten Brennelementen aufgrund der vergleichsweise hohen Strahlenbelastung erheblichen Einschränkungen unterworfen und in der Praxis kaum möglich ist.

Wünschenswert wäre es, bereits vor dem bestimmungsgemäßen Einsatz eines Brennelementes bzw. eines Brennstabhüllrohres im Kernreaktor fundierte Erkenntnisse und empirische Daten bezüglich der Materialeigenschaften und des Korrosionsverhaltens möglicher Hüllrohrwerkstoffe unter den zu erwartenden Betriebsbedingungen zu erlangen, wobei in besonderem Maße der Einfluss von sich während des späteren Reaktorbetriebs ausbildenden Eisenoxidschichten auf den Werkstoffoberflächen berücksichtigt werden sollte.

Der Erfindung liegt daher die Aufgabe zugrunde, ein Verfahren anzugeben, mit dem ein Brennstabhüllrohr derart behandelt oder präpariert werden kann, dass sich der Einfluss von Eisenoxidablagerungen auf seiner Oberfläche möglichst gefahrlos und zugleich präzise unter betriebsnahen Bedingungen studieren und beurteilen lässt.

Diese Aufgabe wird erfindungsgemäß gelöst, indem das Brennstabhüllrohr durch Eintauchen in ein Eisenoxidpartikel enthaltendes wässriges Elektrolytmedium zumindest teilweise mit einer Eisenoxidschicht überzogen wird, wobei die Eisenoxidpartikel durch anodische Oxidation einer eisenhaltigen Arbeitselektrode erzeugt werden.

Die Erfindung geht dabei von der Überlegung aus, dass eine systematische Erforschung des Einflusses von Eisenoxidschichten auf Brennstabhüllrohren auf deren Beständigkeit und chemische Integrität aus Gründen des Strahlenschutzes und der betrieblichen Sicherheit zweckmäßigerweise nicht vor Ort während des realen Reaktorbetriebes erfolgen sollte, sondern im Rahmen einer Simulation an einem "fabrikneuen", noch nicht durch Kontakt mit radioaktivem Kernbrennstoff kontaminierten Prüfling. Ein derartiges Vorgehen erscheint auch deshalb angemessen, da es sich in erster Linie um die Untersuchung von elektrochemischen Vorgängen und Eigenschaften handelt, die durch die Anwesenheit/Abwesenheit radioaktiver Strahlung nur vergleichsweise schwach beeinflusst werden. Allerdings weist ein fabrikneues Brennstabhüllrohr in der Regel noch gar keine Hochtemperaturoxidschicht auf - und wenn, dann allenfalls eine Zirkonoxidschicht, und nicht die hier spezifisch interessierenden eisenoxidhaltigen CRUD-Ablagerungen. Es muss daher erst entsprechend präpariert werden; das heißt, die CRUD-Schicht muss "künstlich" aufgebracht werden.

Prinzipiell ist es denkbar, das zu untersuchende Brennstabhüllrohr zu diesem Zweck in eine frisch präparierte wässrige Lösung von Eisensalzen, zum Beispiel Fe(III)-Chlorid, Fe(II)-Sulfat, FeOOH etc., einzutauchen, bzw. eine derartige Lösung mithilfe einer Hochdruckeinspritzpumpe in einen das Brennstabhüllrohr enthaltenden Autoklaven zu injizieren, so dass die durch Fällung in der Lösung erzeugten Eisenoxide sich an der Hüllrohroberfläche anlagern. Allerdings hat sich herausgestellt, dass derart durch Fällung erzeugte Eisenoxide im Gegensatz zu den sich beim realen Reaktorbetrieb bildenden CRUD-Schichten stets nennenswerte Anteile an eingelagerten oder gebundenen Anionen, zum Beispiel Chlorid- oder Sulfationen, enthalten, welche während nachfolgender Versuchsreihen freigesetzt werden und sich nachteilig oder verfälschend auf die (simulierte) Kühlwasserchemie auswirken. Damit geben derartige Laborversuche an entsprechend präparierten Zirkalloy-Hüllrohren unter Umständen keine verlässliche Auskunft über die Eigenschaften und Auswirkungen der im Reaktorbetrieb sich tatsächlich bildenden CRUD-Ablagerungen.

Es sollten daher alternative Präparationsverfahren zur Anwendung kommen, bei denen die Kontamination der erzeugten Eisenoxide mit störenden Anionen vermieden wird, und die zu Ablagerungen auf den Zirkalloy-Hüllrohren führen, die in ihrer Struktur und Zusammensetzung mit den betrieblich bedingt entstehenden CRUD-Ablagerungen vergleichbar sind. Wie sich überraschenderweise gezeigt hat, werden diese Anforderungen in besonderem Maße durch ein elektrochemisches Verfahren erfüllt, bei dem die Erzeugung und Abscheidung von Eisenoxiden auf einem Zirkalloy-Hüllrohr unter anodischer Oxidation einer eisenhaltigen Arbeitselektrode, zum Beispiel einer Stahlelektrode, in einem wässrigen Elektrolytmedium abläuft.

Für einen besonders präzise steuerbaren und reproduzierbaren Beschichtungsvorgang ist die Arbeitselektrode dabei vorteilhafterweise Bestandteil einer dem Fachmann aus dem Bereich der Galvanotechnik bekannten elektrochemischen Dreielektrodenanordnung, bei der die Arbeitselektrode mithilfe eines als Potentiostat bezeichneten elektronischen Regelkreises durch geeignete Steuerung des zwischen der Arbeitselektrode unter einer Hilfselektrode (Gegenelektrode) durch die Elektrolytlösung fließenden Stroms auf einem konstanten elektrischen Potential gegenüber einer Referenzelektrode (Bezugselektrode) gehalten wird. Alternativ ist auch eine sogenannte galvanostatische Beschaltung der Anordnung möglich, bei der der Strom auf einem konstanten Vorgabewert gehalten wird.

Im Unterschied zur gewöhnlichen galvanischen Beschichtung, bei der die an der Arbeitselektrode (Verbrauchselektrode) in Lösung gehenden Metallionen sich unter Reduktion unmittelbar als metallischer Überzug am zu beschichteten Werkstück niederschlagen, das Werkstück also selber die zur Arbeitselektrode komplementäre Elektrode darstellt, ist nach dem hier vorliegenden Konzept das Brennstabhüllrohr gegenüber den Elektroden der Dreielektrodenanordnung elektrisch isoliert bzw. steht nur über die Elektrolytlösung mit diesen in stofflicher Verbindung. Die an der Arbeitselektrode freigesetzten Eisenionen reagieren zumindest zum Teil mit den Molekülen oder Ionen der wässrigen Elektrolytlösung und bilden dabei je nach den vorherrschenden elektrischen, wasserchemischen und sonstigen Randbedingungen verschiedenartige Eisenoxidpartikel oder Cluster derselben, die zunächst in kolloidaler Lösung fein verteilt in der Flüssigkeit vorliegen und sich mit der Zeit an der Oberfläche des darin eintauchenden Brennstabhüllrohres niederschlagen, so dass dort die gewünschten CRUD-ähnlichen Ablagerungen oder Überzüge entstehen, welche frei von anionischen Kontaminationen sind.

Besonders bevorzugt ist es, wenn das Wachstum der Eisenoxidschicht unter Umgebungsbedingungen stattfindet, die insbesondere hinsichtlich Temperatur und Aggregatzustand des das Brennstabhüllrohr umgebenden Mediums den In-situ-Bedingungen in einem Siedewasserreaktor während des Leistungsbetriebs gleichen. Vorteilhafterweise wird daher bei der Durchführung der elektrochemischen Vorbehandlung des Brennstabhüllrohres die Elektrolytlösung derart aufgeheizt, dass sie sich während der Ablagerung der Eisenoxidpartikel auf dem Brennstabhüllrohr - zumindest in einem dessen unmittelbare Umgebung umfassenden Raumbereich - im Siedezustand befindet.

Bevorzugt ist dazu im Rohrinnenraum des Brennstabhüllrohres eine bezüglich ihrer Heizleistung geeignet dimensionierte elektrische Heizeinrichtung angeordnet, durch die das Rohr von innen beheizt wird. Analog zu den Verhältnissen während des Reaktorbetriebs, bei dem die Zerfallswärme des vom Brennstabhüllrohr umschlossenen Kernbrennstoffs für die Aufheizung der Hüllrohrwand sorgt, stellt sich damit ein von innen nach außen gerichteter Wärmefluss, das heißt ein Wärm eübergang vom Brennstabhüllrohr auf das umgebende, gegebenenfalls extern vortemperierte Kühlmedium - hier: die Elektrolytflüssigkeit - ein, so dass dieses in den Siedezustand versetzt bzw. in diesem gehalten wird. Bevorzugt wird dabei, genau wie in einem Siedewasserreaktor, der Bereich unterkritischen Siedens (sogenanntes Blasensieden) eingestellt, bei dem im Gegensatz zum sogenannten Filmsieden ein intensiver Wärmeaustausch mit vergleichsweise hohem Wärmeübergangskoeffizienten mit der Hüllrohrwand gewährleistet ist. Damit werden die realen Betriebsbedingungen in einem Siedewasserreaktor besonders gut nachempfunden oder simuliert, so dass die sich auf dem Brennstabhüllrohr ablagernden Eisenoxidschichten in struktureller Hinsicht praktisch identisch zu den betriebsbedingt im Reaktor entstehenden CRUD-Schichten sind.

Wie bereits erwähnt, hängt die exakte chemische Zusammensetzung der Eisenoxidschichten, insbesondere das Verhältnis von Eisen(II,III)-Oxiden (Fe₃O₄, sogenannter Magnetit) zu Eisen(III)-Oxiden (Fe₂O₃, sogenannter Hämatit), von verschiedenen Details und Randbedingungen der elektrochemischen Prozessführung ab, insbesondere jedoch von der "Wasserchemie" der Elektrolytlösung. Vorteilhafterweise wird daher die chemische Zusammensetzung der bei der Ablagerung der Eisenoxidpartikel auf dem Brennstabhüllrohr gebildeten Eisenoxidschicht, insbesondere das Verhältnis von Magnetit- zu Hämatitanteilen, durch die Einleitung von Gasen, insbesondere von Sauerstoff, in das Elektrolytmedium gesteuert. Daneben können dem wässrigen Elektrolytmedium natürlich auch flüssige oder feste Additive mit oxidierender oder reduzierender Wirkung beigegeben werden, um die Umgebungsbedingungen während des Abscheidens und damit die Zusammensetzung der Eisenoxide zusteuern.

Darüber hinaus kann es sinnvoll sein, im Rahmen systematischer Testreihen auch den Einfluss verschiedenartiger Fremdionen, wie sie in den beim Reaktorbetrieb entstehenden CRUD-Schichten vorkommen, in Laborversuchen zu studieren. Vorteilhafterweise ist daher das Elektrodenmaterial der Arbeitselektrode bei der elektrolytischen Präparation des Hüllrohres derart gewählt, dass die sich auf der Rohroberfläche ablagernde Eisenoxidschicht einen vorgegebenen Anteil an eingelagerten Fremdionen, vorzugsweise an metallischen Fremdionen, insbesondere Zn²⁺, Mn²⁺, Ni²⁺ und/oder Cr³⁺, enthält. Das heißt, das Elektrodenmaterial besteht zweckmäßigerweise aus einer entsprechenden eisenbasierten Metalllegierung.

Die mit der Erfindung erzielten Vorteile bestehen insbesondere darin, dass es mit Hilfe eines elektrochemischen Verfahrens, speziell bei geeigneter Wahl der thermischen und der chemischen Umgebungsbedingungen, ermöglicht ist, neuwertige Brennstabhüllrohre gezielt mit Eisenoxidschichten zu überziehen, die in ihrer Struktur und Zusammensetzung praktisch identisch zu denjenigen Schichten sind, die während des Einsatzes derartiger Hüllrohre in einem Siedewasserreaktor entstehen. Insbesondere wird dabei eine Kontamination der Eisenoxidschichten durch eingelagerte Anionen, wie sie bei einer Beschichtung mit Hilfe einer durch Lösung von Eisensalzen erzeugten eisenoxidhaltigen Beschichtungslösung unvermeidlich wäre, vermieden. Der Einsatz von störanfälligen Hochdruckeinspritzpumpen oder dergleichen ist ebenfalls nicht erforderlich. Stattdessen lassen sich Zusammensetzung, Struktur und Bildungsrate der Eisenoxide anhand einfacher Gesetzmäßigkeiten, wie zum Beispiel dem Faraday-Gesetz, durch die Variation einfach zu beherrschender Einflussparameter präzise und zielgerichtet kontrollieren bzw. steuern.

Mit den so präparierten Brennstabhüllrohren, die anschließend als Prüfkörper für eine laborgestützte Untersuchung ihres Korrosionsverhaltens unter dem Einfluss der CRUD-Schichten Verwendung finden, wird die Durchführung systematischer Testreihen im Hinblick auf die notwendigen Sicherheitsvorkehrungen und behördlichen Vorschriften etc. wesentlich vereinfacht. Es können also durch eine Variation der Versuchsparameter vergleichsweise einfach und ohne eine Gefährdung der Umgebung oder des für den Prüfstand zuständigen Bedienpersonals eine Reihe von Szenarien "durchgespielt" werden, was im realen Reaktorbetrieb allein schon aufgrund der behördlichen Auflagen praktisch nicht möglich wäre. Die dabei gewonnenen Erkenntnisse können dann bei der Auslegung, Konzeption, Planung und Ausführung der Hüllrohre an sich sowie gegebenenfalls weiterer Reaktorkomponenten und bei der Wahl zugehöriger Betriebsparameter etc. in angemessener Weise berücksichtigt werden. Brennelemente können daher unter realeren Bedingungen als bislang entwickelt und qualifiziert werden.

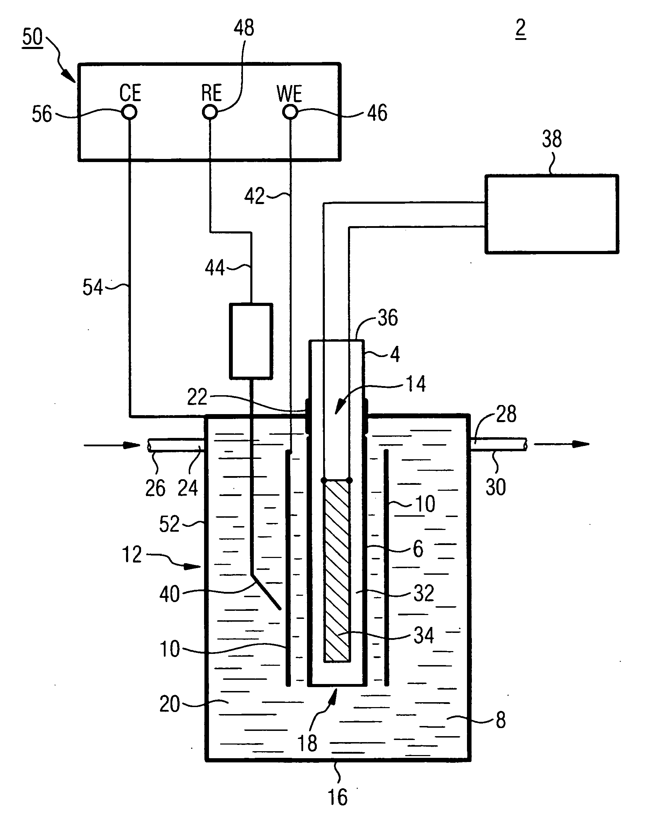

Ein Ausführungsbeispiel der Erfindung wird anhand einer Zeichnung näher erläutert. Darin zeigt die Figur eine Prinzipdarstellung einer Anordnung zur Beschichtung eines Brennstabhüllrohres mit einer Eisenoxidschicht.

Die in der Figur schematisch dargestellte Beschichtungsvorrichtung 2 dient zur Beschichtung eines aus Zirkalloy bestehenden Brennstabhüllrohres 4 für einen Brennstab eines Siedewasserreaktors mit einer Eisenoxidschicht 6. Ziel ist es, auf die äußere Oberfläche des Brennstabhüllrohres 4 eine Schicht aus Eisenoxidpartikeln aufzubringen, die bezüglich ihrer chemischen Zusammensetzung, ihrer mikroskopischen Struktur und ihrer sonstigen physikalischen und chemischen Eigenschaften möglichst gut mit der auch als CRUD bezeichneten Eisenoxidschicht übereinstimmt, die sich beim bestimmungsgemäßen Einsatz eines derartigen Hüllrohres 4 in einem Siedewasserreaktor ausbildet. Zu diesem Zweck beruht die Funktionsweise der Beschichtungsvorrichtung 2 auf einem elektrochemischen Grundprinzip, gemäß dem das Brennstabhüllrohr 4 durch Eintauchen in ein Eisenoxidpartikel enthaltendes wässriges Elektrolytmedium 8 mit der gewünschten Eisenoxidschicht 6 überzogen wird, wobei die Eisenoxidpartikel durch anodische Oxidation einer eisenhaltigen Arbeitselektrode 10, hier einer Stahlelektrode mit geringen Anteilen an metallischen Fremdionen, erzeugt und in dem Elektrolytmedium 8 bereitgestellt werden.

Im einzelnen umfasst die Beschichtungsvorrichtung 2 dazu einen auch als Autoklaven bezeichneten, thermisch von der Außenwelt isolierten und druckdicht verschließbaren metallischen Druckbehälter 12 mit einer Durchführungsöffnung 14 in der Behälterwand 16, durch die das zu beschichtende Brennstabhüllrohr 4 von außen hindurch gesteckt und mit seinem unteren, verschlossenen Ende 18 in den Behälterinnenraum 20 eingebracht wird. Durch ein zwischen der Außenseite des Brennstabhüllrohres 4 und der Innenfläche der Durchführungsöffnung 14 angeordnetes ringförmiges und elektrisch isolierendes Dichtelement 22, zum Beispiel aus Teflon, wird zum einen die Dichtigkeit der Anordnung bei eingeschobenem Brennstabhüllrohr 4 gewährleistet und zum anderen das Brennstabhüllrohr 4 von der metallischen Behälterwand 16 elektrisch isoliert.

Über eine an einen Einlassstutzen 24 angeschlossene Zufuhrleitung 26 wird dem Behälterinnenraum 20 des Druckbehälters 12 ein wässriges Elektrolytmedium 8 zugeführt. Über eine an einen Auslassstutzen 28 angeschlossene Entnahmeleitung 30 kann bei Bedarf "verbrauchtes" Elektrolytmedium 8 wieder entnommen bzw. abgelassen werden. Dazu sind in die Zufuhrleitung 26 und in die Entnahmeleitung 30 entsprechende, hier nicht näher dargestellte Regelventile integriert, über die auch eine Druckregelung des Behälterinnendrucks erfolgen kann.

Im vorliegenden Fall ist während des Beschichtungsbetriebs ein kontinuierlicher Durchsatz von Elektrolytlösung 8 durch den Druckbehälter 12 und damit eine ständige Umströmung des in die Elektrolytlösung 8 eintauchenden Brennstabhüllrohres 4 vorgesehen, wobei der über die Entnahmeleitung 30 entnommene "verbrauchte" Anteil in einer hier nicht dargestellten Aufbereitungsvorrichtung chemisch aufbereitet oder "aufgefrischt", gegebenenfalls mit chemisch wirksamen Additiven versetzt, entgast oder mit Gasen angereichert und anschließend mit Hilfe einer Förderpumpe in der Art eines Flüssigkeitskreislaufs wieder über die Zufuhrleitung 26 in den Druckbehälter 12 zurückgeführt wird. Die Förderpumpe (nicht dargestellt) kann dabei als Kompressionspumpe ausgestaltet sein, um das im Behälterinnenraum 20 vorhandene Elektrolytmedium 8 entsprechend der eingestellten Kompressionsleistung unter Druck zu setzen. Weiterhin kann mit Hilfe einer in die Zufuhrleitung 26 geschalteten, hier nicht dargestellten Heizeinrichtung eine (Vor-) Temperierung des in den Druckbehälter 12 einströmenden Mediums erfolgen, so dass insgesamt die Druck- und Temperaturverhältnisse des bei einem Siedewasserreaktor in den Reaktordruckbehälter einströmenden Hochtemperaturkühlwassers nachempfunden bzw. simuliert werden.

Eine noch bessere Reproduktion der Siedewasserreaktor-Bedingungen gelingt, indem das Brennstabhüllrohr 4 während der elektrochemischen Beschichtung von innen beheizt wird, wodurch der im Reaktorbetrieb stattfindende, in diesem Fall durch die radioaktiven Zerfallsprozesse des Kernbrennstoffs bedingte Wärmeübergang von der Hüllrohrwand 32 auf das umgebende Kühlmedium simuliert wird. Zu diesem Zweck ist in dem von der Hüllrohrwand 32 umschlossenen Hohlraum des Brennstabhüllrohres 4 eine elektrische Heizeinrichtung 34 angeordnet, zum Beispiel eine zylindrische Hochleistungsheizpatrone, die vom aus dem Druckbehälter 12 herausragenden oberen, nicht verschlossenen Ende 36 her in das Brennstabhüllrohr 4 eingeschoben werden kann. Um unerwünschte Potentialverschiebungen in der Hüllrohrwand 32 zu vermeiden, sind die Heizspiralen der Heizeinrichtung 34 galvanisch vom äußeren Stromnetz getrennt. Eine zugehörige Regeleinrichtung 38 regelt den Heizstrom und damit die Heizleistung derart, dass das Elektrolytmedium 8 zumindest in der näheren Umgebung des in den Druckbehälter 12 hineinragenden Hüllrohrabschnitts in den Siedezustand versetzt und während des elektrochemischen Beschichtungsvorgangs in diesem gehalten wird. Das Entstehen großflächiger Siedefilme auf der Hüllrohroberfläche, die den Wärmeübergang beeinträchtigen könnten, ist dabei durch geeignete Regelung der Heizleistung zu vermeiden.

Die zur Beschichtung des Brennstabhüllrohres 4 nötigen Eisenoxidpartikel werden durch die anodische Oxidation der eisenhaltigen Arbeitselektrode 10 erzeugt, bei der sich Eisenionen von der Elektrodenoberfläche ablösen und mit den wässrigen Bestandteilen der Elektrolytlösung 8 zu verschiedenen Eisenoxiden reagieren, welche sich nach überwiegend konvektivem Transport durch den Druckbehälter 12 schließlich wie gewünscht an der Oberfläche des Brennstabhüllrohres 4 niederschlagen.

Für eine möglichst gleichmäßige und homogene Beschichtung des Brennstabhüllrohres 4 ist die Arbeitselektrode 10 in der Art eines Hohlzylinders gestaltet und in einem Abstand von ein paar Zentimetern oder weniger konzentrisch um das Brennstabhüllrohr 4 herum angeordnet. Außerhalb des von der Arbeitselektrode 10 gebildeten Hohlzylinders taucht eine ihr potentialseitig zugeordnete Referenzelektrode 40 in das Elektrolytmedium 8 ein. Die Arbeitselektrode 10 und die Referenzelektrode 40 sind jeweils über elektrisch isoliert durch die Behälterwand 16 des Druckbehälters 12 hindurchgeführte Anschlussleitungen 42, 44 mit den entsprechenden Eingängen 46, 48 eines zur Spannungsregelung vorgesehenen, nach dem Prinzip eines Differenz-Operationsverstärkers arbeitenden Hochspannungspotentiostaten 50 verbunden. Die für eine Potential-geregelte Dreielektrodenanordnung erforderliche dritte Elektrode, die sogenannte Gegenelektrode 52 oder Hilfselektrode, wird im Ausführungsbeispiel durch die Behälterwand 16 des Druckbehälters 12 selbst gebildet; in alternativer Ausführung kann aber auch beispielsweise eine aus Platin bestehende separate Gegenelektrode im Behälterinnenraum 20 des Druckbehälters 12, insbesondere in Form einer sich um die Arbeitselektrode 10 und die Referenzelektrode 40 herumwindenden Spirale, vorgesehen sein. Die Gegenelektrode 52 ist über eine Anschlussleitung 54 mit dem Ausgang 56 des Operationsverstärkers des Potentiostaten 50 verbunden.

Der Potentiostat 50 misst im Prinzip die Spannung zwischen Bezugselektrode 40 und Arbeitselektrode 10 an einem sehr hochohmigen Eingang, vergleicht die Spannung mit einem eingestellten Sollwert und stellt entsprechend einen Strom durch die Gegenelektrode 52 so ein, dass die Abweichung zwischen Istwert und Sollwert des Potentials verschwindet. Der Regelkreis wird durch die elektrochemische Zelle mit dem Elektrolyten 8 selbst geschlossen, der Strom fließt durch die Arbeitselektrode 10 zurück nach Erde. Damit ist auch bei prozessbedingten Schwankungen der Stromstärke um mehrere Dekaden eine ausgesprochen präzise und gut reproduzierbare Führung und Kontrolle der elektrischen Potentiale ermöglicht.

Auch die anderen, für die Eisenoxid-Erzeugung und Beschichtung des Brennstabhüllrohres 4 relevanten chemischen und physikalischen Prozessparameter, wie etwa der im Elektrolytkreislauf gelöste Sauerstoffgehalt oder die Temperatur an der Hüllrohroberfläche, können einfach und zielgerichtet beeinflusst, kontrolliert und protokolliert werden. Durch die Vermeidung störender anionischer Einlagerungen und aufgrund der den Verhältnissen in einem Siedewasserreaktor entsprechenden Rand- und Umgebungsbedingungen können so auf vergleichsweise einfache Weise kontaminationsfreie Eisenoxidschichten 6 auf Zirkalloy-Hüllrohren 4 erzeugt werden, die in Bezug auf Struktur und Zusammensetzung mit realem CRUD vergleichbar sind. Der Erfolg der Methode lässt sich durch verschiedenartige qualitative und quantitative Nachweisverfahren, zum Beispiel durch Röntgendiffraktometrie, belegen.

### Bezugszeichenliste

- 2: Beschichtungsvorrichtung
- 4: Brennstabhüllrohr
- 6: Eisenoxidschicht
- 8: Elektrolytmedium
- 10: Arbeitselektrode
- 12: Druckbehälter
- 14: Durchführungsöffnung
- 16: Behälterwand
- 18: verschlossenes Ende
- 20: Behälterinnenraum
- 22: Dichtelement
- 24: Einlassstutzen
- 26: Zufuhrleitung
- 28: Auslassstutzen
- 30: Entnahmeleitung
- 32: Hüllrohrwand
- 34: Heizeinrichtung
- 36: offenes Ende
- 38: Regeleinrichtung
- 40: Referenzelektrode
- 42,44: Anschlussleitung
- 46,48: Eingang
- 50: Potentiostat
- 52: Gegenelektrode
- 54: Anschlussleitung
- 56: Ausgang

## Patentansprüche

1. Verfahren zur Vorbehandlung eines Brennstabhüllrohres (4) für Materialuntersuchungen, insbesondere für Untersuchungen des Korrosionsverhaltens, bei dem das Brennstabhüllrohr (4) in ein wässriges Elektrolytmedium (8) eingetaucht und zumindest teilweise mit einer Eisenoxidschicht (6) überzogen wird, **dadurch gekennzeichnet, dass**
das Elektrolytmedium (8) Eisenoxidpartikel enthält, die durch anodische Oxidation einer eisenhaltigen Arbeitselektrode (10) erzeugt werden.

2. Verfahren nach Anspruch 1, bei dem das Elektrolytmedium (8) derart aufgeheizt wird, dass es sich während der Ablagerung der Eisenoxidpartikel auf dem Brennstabhüllrohr (4) im Siedezustand, vorzugsweise im Bereich unterkritischen Siedens, befindet.

3. Verfahren nach Anspruch 1 oder 2, bei dem das Brennstabhüllrohr (4) durch eine im Rohrinnenraum angeordnete Heizeinrichtung (34) beheizt wird.

4. Verfahren nach einem der Ansprüche 1 bis 3, bei dem die chemische Zusammensetzung der bei der Ablagerung der Eisenoxidpartikel auf dem Brennstabhüllrohr (4) gebildeten Eisenoxidschicht (6), insbesondere das Verhältnis von Magnetit- zu Härnatitanteilen, durch die Einleitung von Gasen, insbesondere von Sauerstoff, in das Elektrolytmedium (8) gesteuert wird.

5. Verfahren nach einem der Ansprüche 1 bis 4, bei dem das Elektrodenmaterial der Arbeitselektrode (10) derart gewählt wird, dass die sich auf dem Brennstabhüllrohr (4) ablagernde Eisenoxidschicht (6) einen Anteil an eingelagerten Fremdionen, vorzugsweise an metallischen Fremdionen, insbesondere Zn²⁺, Mn²⁺, Ni²⁺ und/oder Cr³⁺, enthält.

6. Verwendung einer strom- und/oder spannungsseitig durch einen zugehörigen Potentiostaten (50) geregelten elektrochemischen Dreielektrodenanordnung mit einer eisenhaltigen Arbeitselektrode (10) in einem wässrigen Elektrolytmedium (8) zur Vorbehandlung eines Brennstabhüllrohres (4) für eine anschließende Untersuchung seiner Korrosionseigenschaften.

## Claims

1. A method for the pre-treatment of a fuel-rod cladding tube (4) for material examinations, in particular for examinations of the corrosion behavior, wherein the fuel-rod cladding tube (4) is submerged into an aqueous electrolyte medium (8) and coated, at least partially, with an iron-oxide layer (6),
**characterized in that**
the electrolyte medium (8) contains iron-oxide particles generated by the anodic oxidation of a working electrode (10) containing iron.

2. The method of claim 1, wherein the electrolyte medium (8) is heated up such that during the deposition of the iron-oxide particles on the fuel-rod cladding tube (4), it is in the boiling state, preferably in the range of undercritical boiling.

3. The method of claim 1 or 2, wherein the fuel-rod cladding tube (4) is heated by a heating device (34) arranged in the interior of the tube.

4. The method of any of claims 1 to 3, wherein the chemical composition of the iron-oxide layer (6) formed through the deposition of the iron-oxide particles on the fuel-rod cladding tube (4), in particular the ratio of magnetite shares to hematite shares, is controlled by introducing gases, in particular oxygen, into the electrolyte medium (8).

5. The method of any of claims 1 to 4, wherein the electrode material of the working electrode (10) is chosen such that the iron-oxide layer (6) depositing on the fuel-rod cladding tube (4) contains a share of incorporated foreign ions, in particular Zn²⁺, Mn²⁺, Ni²⁺, and/or Cr³⁺.

6. Use of an electrochemical three-electrode arrangement controlled by an associated potentiostate (50) on the current and/or voltage side, having a working electrode (10) containing iron in an aqueous electrolyte medium (8) for the head-end of a fuel-rod cladding tube (4) for a subsequent examination of its corrosion properties.

## Revendications

1. Procédé pour le traitement initial d'une gaine (4) de barre de combustible pour des examens de matériaux, en particulier pour des examens du comportement de corrosion, dans lequel la gaine (4) de barre de combustible est immergée dans un milieu électrolytique (8) aqueux et recouverte, au moins partiellement, d'une couche (6) d'oxyde de fer,
**caractérisé en ce que**
le milieu électrolytique (8) contient des particules d'oxyde de fer générées par l'oxydation anodique d'une électrode de travail (10) contenant du fer.

2. Procédé d'après la revendication 1, dans lequel le milieu électrolytique (8) est échauffé de manière à ce qu'il se trouve, pendant la déposition des particules d'oxyde de fer sur la gaine (4) de barre de combustible, à l'état d'ébullition, de préférence dans le domaine d'ébullition sous-critique.

3. Procédé d'après la revendication 1 ou 2, dans lequel la gaine (4) de barre de combustible est échauffé par un dispositif de chauffage (34) disposé à l'intérieur de la gaine.

4. Procédé d'après l'une quelconque des revendications 1 à 3, dans lequel la composition chimique de la couche (6) d'oxyde de fer formée par la déposition des particules d'oxyde de fer sur la gaine (4) de barre de combustible, en particulier le rapport des parts de magnétite aux parts de hématite, est réglé en introduisant des gaz, en particulier d'oxygène, dans le milieu électrolytique (8).

5. Procédé d'après l'une quelconque des revendications 1 à 4, dans lequel le matériaux d'électrode de l'électrode de travail (10) est choisi de manière à ce que la couche (6) d'oxyde de fer que se dépose sur la gaine (4) de barre de combustible contient une part d'ions étrangers incorporés, en particulier Zn²⁺, Mn²⁺, Ni²⁺ et/ou Cr³⁺.

6. Utilisation d'une disposition à trois électrodes électrochimique réglée par un potentiostat (50) associé du côté de courant et/ou de tension, ayant une électrode de travail (10) contenant du fer dans un milieu électrolytique (8) aqueux pour le traitement initial d'une gaine (4) de barre de combustible pour un examen subséquent de ses propriétés de corrosion.
